# EUROPEAN PATENT APPLICATION

(11) **EP 4 108 514 A1**
(43) Date of publication of application: **28.12.2022**
(21) Application number: 22164972.6
(22) Date of filing: 29.03.2022
(51) Int. Cl.: B60L 53/60, B60L 53/65, B60L 53/66, B60L 53/67

(54) **METHOD, DEVICE, APPARATUS AND SYSTEM FOR CONTROLLING CHARGING STATION, AND CHARGING STATION SYSTEM**

(30) Priority: 23.06.2021 CN 202110701544
(71) Applicant: Sungrow Power Supply Co., Ltd., Hefei, Anhui 230088 (CN)
(72) Inventor: WANG, Luguo, Hefei 230088 (CN); CHEN, Hongchuang, Hefei 230088 (CN)
(74) Representative: Rooney, John-Paul

(57) **Abstract**

A method, device and system for controlling a charging station. A charging station includes multiple charging positions each comprising a charging pile and a parking space corresponding to the charging pile. The method includes: obtaining first information in real time, the first information comprises usage status information and daily usage information of the charging piles and occupancy status information of the parking spaces, the usage status information is information about whether the charging piles being currently in use, and the daily usage information is information about a quantity of charging piles used in a predetermined time period of each day; and determining parking information according to the first information, the parking information comprises a quantity of first available parking spaces and a quantity of second available parking spaces, the first available parking spaces are used for fuel vehicles, and the second available parking spaces are used for electric vehicles.

## Description

### FIELD

The present disclosure relates to the technical field of new energy, and in particular to a method, device, apparatus and system for controlling a charging station, a computer-readable storage medium, and a charging station system.

### BACKGROUND

The existing new energy charging stations have two types: dedicated charging stations and open charging stations. The dedicated charging stations only allow new energy vehicles to enter. Since the current number of new energy vehicles is low, the dedicated charging stations may be not on service most of the time and the land utilization rate is low. For the open charging stations, fuel vehicles can occupy parking spaces of the new energy vehicles, and the new energy vehicles cannot be charged.

Furthermore, conventionally, a charging system and a parking system of a charging station are independent of each other, which will cause the problem that idle parking spaces of the charging station do not correspond to idle charging piles of the charging station. For example, a user finds an idle charging pile of a charging station from a charging app, but finds that all parking spaces were already occupied when he arrives at the charging station. Some vehicles do not leave after the charging is completed and keep occupying parking spaces, but the charging system cannot obtain status of the parking spaces. Some users search for a charging station through the map, and they can only know that the charging station has charging piles, but cannot know fault status and usage status of the charging piles. Only when they arrive at the charging station, they can find that the charging pile cannot charge or there is no idle charging pile.

Therefore, there is an urgent need to provide a method to solve the problem that the idle parking spaces do not correspond to the idle charging piles in the conventional charging station.

The above information disclosed in the background is only for convenience of understanding the background technology of the present disclosure. The background may contain certain information, which does not form the prior art known in the country for those skilled in the art.

### SUMMARY

An objective of the present disclosure is to provide a method, device, apparatus and system for controlling a charging station, a computer-readable storage medium, and a charging station system, to solve the problem that idle parking spaces do not correspond to charging piles in a conventional charging station.

In one aspect of the present disclosure, a method for controlling a charging station is provided. The charging station includes a plurality of charging positions, each of the plurality of charging positions includes a charging pile and a parking space corresponding to the charging pile. The method includes: obtaining first information in real time, where the first information includes usage status information of the charging piles, daily usage information of the charging piles, and occupancy status information of the parking spaces. The usage status information is information about whether the charging piles being currently in use, and the daily usage information is information about a quantity of charging piles used in a predetermined time period of each day obtained according to historical data; and determining parking information according to the first information, where the parking information includes a quantity of first available parking spaces and a quantity second available parking spaces, the first available parking spaces are used for fuel vehicles, and the second available parking spaces are used for electric vehicles.

Optionally, obtaining the first information in real time includes: obtaining the usage status information and the daily usage information in real time; obtaining first image information of a parking area in real time, wherein the parking area is an area corresponding to the parking space; and determining the occupancy status information according to the first image information.

Optionally, determining the parking information according to the first information includes: determining information about available charging positions according to the usage status information and the occupancy status information, wherein the information about available charging positions comprises a quantity of currently available charging positions and locations of the currently available charging positions, the available charging position is a charging position of which the charging pile is in an unused state and the parking space is in an unoccupied state; determining a quantity of second available parking spaces in the predetermined time period according to the daily usage information and the usage status information; and determining a quantity of first available parking spaces according to the quantity of the available charging positions and the quantity of second available parking spaces.

Optionally, obtaining the first information in real time includes: obtaining first license plate information of a target vehicle at an entrance of the charging station in real time, wherein the target vehicle is a vehicle requesting to enter the charging station; and obtaining cumulated use time of each of the charging piles. After determining the quantity of first available parking spaces according to the quantity of available charging positions and the quantity of second available parking spaces, the method further includes: determining whether the target vehicle is an electric vehicle according to the first license plate information, to obtain a determination result; and determining a target parking area of the target vehicle according to the determination result and the accumulated use time.

Optionally, determining the target parking area of the target vehicle according to the determination result and the accumulated use time includes: in a case that the target vehicle is a fuel vehicle, determining the target parking area as a first available charging position, wherein the first available charging position is an available charging position including the charging pile with longest accumulated use time; and in a case that the target vehicle is an electric vehicle, determining the target parking area as a second available charging position, wherein the second available charging position is an available charging position including the charging pile with shortest accumulated use time.

Optionally, after determining the target parking area of the target vehicle according to the determination result and the accumulated use time, the method further includes: displaying location information of the target parking area on a display device to instruct the target vehicle to park at the target parking area, wherein the display device is arranged in a predetermined area in the charging station or outside the charging station.

Optionally, after determining the target parking area of the target vehicle according to the determination result and the accumulated use time, the method further includes: controlling a ground lock corresponding to the target parking area to lower, to cause the target vehicle to enter the target parking area.

Optionally, after determining the target parking area of the target vehicle according to the determination result and the accumulated use time, the method further includes: in a case that there is a vehicle that has already parked in the target parking area, obtaining second image information of the target parking area; determining second license plate information of the vehicle that has already parked in the target parking area according to the second image information; determining whether the first license plate information and the second license plate information are consistent; determining that the target vehicle is parked incorrectly in a case that the first license plate information and the second license plate information are inconsistent; and generating an error message and sending the error message to a user terminal when the target vehicle is parked incorrectly.

Optionally, in a case of determining that the target vehicle is parked correctly, the method further includes: determining a first duration, where the first duration is a time period during which the target vehicle stays in the target parking area; obtaining a second duration, where the second duration is a time period during which the target vehicle is charged in the target parking area; determining whether a difference between the first duration and the second duration exceeds a predetermined value; calculating a parking fee corresponding to the difference in a case that the difference between the first duration and the second duration exceeds the predetermined value; and sending the parking fee and the second license plate information to a toll collection device.

Optionally, after determining the quantity of first available parking spaces according to the quantity of available charging positions and the quantity of second available parking spaces, the method further includes at least one step of: displaying the quantity of first available parking spaces and/or the quantity of second available parking spaces on a display device, wherein the display device is arranged in a predetermined area in the charging station or outside the charging station; and sending the quantity of first available parking spaces and/or the quantity of second available parking spaces to a user terminal.

In another aspect of the present disclosure, a device for controlling a charging station is provided. The charging station includes a plurality of charging positions, each of the plurality of charging positions includes a charging pile and a parking space corresponding to the charging pile. The device includes a first acquisition unit and a first determination unit. The first acquisition unit is configured to: obtain first information in real time, where the first information includes usage status information of the charging piles, daily usage information of the charging piles, and occupancy status information of the parking spaces, the usage status information is information about whether the charging piles being currently in use, and the daily usage information is information about a quantity of charging piles used in a predetermined time period of each day obtained according to historical data. The first determination unit is configured to: determine parking information according to the first information, where the parking information includes a quantity of first available parking spaces and a quantity of second available parking spaces, the first available parking spaces are used for fuel vehicles, and the second available parking spaces are used for electric vehicles.

In another aspect of the present disclosure, a computer-readable storage medium is provided. The computer-readable storage medium includes a program stored thereon, where the program, when being executed, implements any one of the aforementioned methods.

In another aspect of the present disclosure, a processor is provided. The processor is configured to run a program, where the program, when being executed, implements any one of the aforementioned methods.

In another aspect of the present disclosure, an apparatus for controlling a charging station is provided. The apparatus includes a processor and a computer-readable storage medium that stored a program thereon, the program, when being executed by the processor, implements any one of the aforementioned methods.

In another aspect of the present disclosure, a system for controlling a charging station is provided. The system includes a parking controlling platform and a charging controlling platform. The parking controlling platform includes a control device, and the control device implements any one of the aforementioned methods. The charging controlling platform is in communication connection with the parking controlling platform, and the charging controlling platform is configured to: obtain usage status information of the charging piles, daily usage information of the charging piles and first image information of the parking area, and send the usage status information, the daily usage information and the first image information to the parking controlling platform.

In another aspect of the present disclosure, a charging station system is provided. The system includes a charging station and a controlling system for the charging station, and the controlling system is the aforementioned system for controlling the charging station.

In the method according to embodiments of the present disclosure, first information is obtained in real time, where the first information includes information about whether the charging piles being currently in use, information about a quantity of charging piles used in a predetermined time period of each day obtained according to historical data, and occupancy status information of parking spaces. Then a quantity of first available parking spaces for fuel vehicles and a quantity of second available parking spaces for electric vehicles are determined according to the first information. Compared with the conventional method, in the method according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

### BRIEF DESCRIPTION OF THE DRAWINGS

The drawings are used to provide further understanding of the present disclosure, and exemplary embodiments and descriptions of the present disclosure are used to explain the present disclosure, and do not constitute an improper limitation of present disclosure.
Figure 1 is a flowchart of a method for controlling a charging station according to an embodiment of the present disclosure; and
Figure 2 is a schematic diagram of a device for controlling a charging station according to an embodiment of the present disclosure.

### DETAILED DESCRIPTION OF EMBODIMENTS

It should be noted that embodiments in the present disclosure and features in the embodiments can be combined with each other in case of no conflict. The present disclosure will be described in detail with reference to the drawings and in conjunction with the embodiments hereinafter.

In order to make those skilled in the art understand the technical solutions of the present disclosure better, the technical solutions in the embodiments of the present disclosure will be described hereinafter in conjunction with the drawings in the embodiments of the present disclosure. Apparently, the described embodiments are only a part of the embodiments of the present disclosure, rather than all embodiments. Based on the embodiments in the present disclosure, all of other embodiments, made by the person skilled in the art without any creative efforts, fall into the scope of protection of the present disclosure.

It should be noted that the terms "first" and "second" in the description and claims of the present disclosure and the above-mentioned drawings are used to distinguish similar objects, and are not necessarily used to describe a specific sequence or sequence. It should be understood that the data used in this way can be interchanged under appropriate circumstances in order to describe the embodiments of the present disclosure. In addition, the terms "including" and "having" and any variations of them are intended to encompass nonexclusive inclusion. For example, a process, method, system, product, or device that includes a series of steps or units is not necessarily limited to those steps or units that are listed, but may include other steps or units that are not clearly listed or are inherent to the process, method, system, product, or device.

It should be understood that when it is described that an element (such as a layer, film, region, or substrate) is "on" another element, the element may be directly on another element, or an intermediate element may be disposed between the element and another element. Moreover, in the specification and claims of the present disclosure, when it is described that an element is "connected" to another element, the element may be "directly connected" to another element, or "connected" to another element through a third element.

As stated in the background, the idle parking spaces do not correspond to the idle charging piles in the conventional charging station. In order to solve the problem, a method, a device and a system for controlling a charging station, a computer-readable storage medium, a processor, and a charging station system are provided according to embodiments of the present disclosure.

According to an embodiment of the present disclosure, a method for controlling a charging station is provided. The charging station includes a plurality of charging positions, and each of the plurality of charging positions includes a charging pile and a parking space corresponding the charging pile.

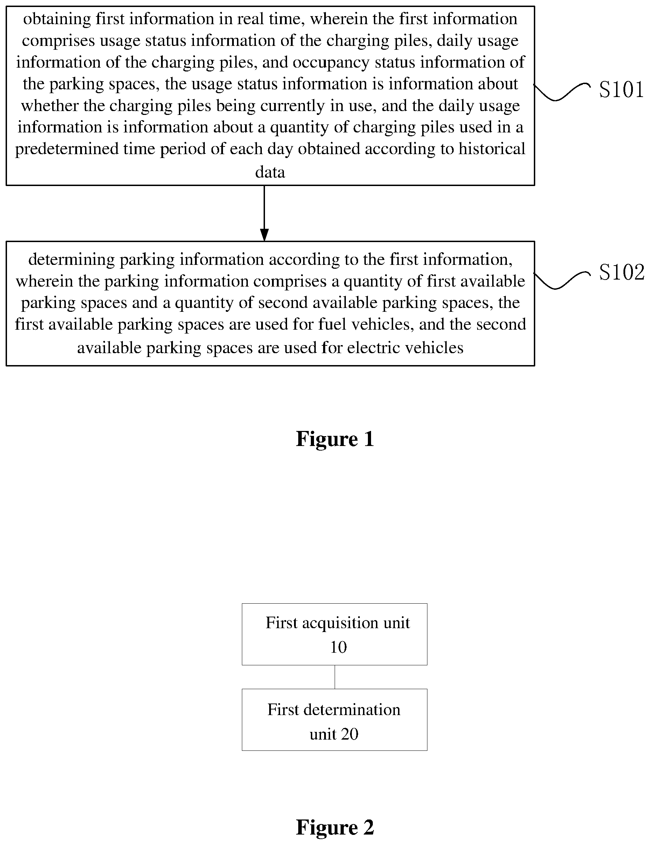

Figure 1 is a flowchart of a method for controlling a charging station according to an embodiment of the present disclosure. As shown in Figure 1, the method includes following steps.

In step S101, first information is obtained in real time. The first information includes usage status information and daily usage information of charging piles, and occupancy status information of parking spaces. The usage status information is information about whether the charging piles being currently in use, and the daily usage information is information about a quantity of charging piles used in a predetermined time period of each day obtained according to historical data.

In step S102, parking information is determined according to the first information. The parking information includes a quantity of first available parking spaces and a quantity of second available parking spaces, the first available parking spaces are used for fuel vehicles, and the second available parking spaces are used for electric vehicles.

In the method, first information is obtained in real time, where the first information includes information about whether the charging piles being currently in use, information about the quantity of charging piles used in a predetermined time period of each day obtained according to historical data, and occupancy status information of the parking spaces. Then the quantity of first available parking spaces for fuel vehicles and the quantity of second available parking spaces for electric vehicles are determined according to the first information. Compared with the conventional technology, in the method according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

In practical applications, the daily usage information may be obtained by: dividing 24 hours of a day into multiple predetermined time periods, counting the quantity of charging piles used in each of the multiple predetermined time periods based on historical data, and analyzing the quantity of charging piles used in the multiple predetermined time periods by utilizing a prediction model. The daily use information includes information about the quantity of charging piles used in each predetermined time period of each day.

In an embodiment, obtaining the first information in real time includes: obtaining the usage status information and the daily usage information in real time; obtaining first image information of a parking area in real time, where the parking area is an area corresponding to the parking space; and determining the occupancy status information according to the first image information.

In an embodiment, usage status information, daily usage information, and first image information of a charging pile controlling platform are obtained in real time. The first image information is a photo or video of a parking area. A charging pile is installed with one or more image collection devices, such as a camera, that can periodically take photos and/or videos of a parking area and then upload collected photos and/or videos of the parking area to the charging pile controlling platform. By acquiring the photos and/or videos sent by the charging pile controlling platform, and performing image processing on the photos and/or videos, it is determined that whether there is a vehicle in the parking area, so as to determine the occupancy status information. Alternatively, it is also possible to directly obtain the usage status information, the daily usage information, and the first image information. Alternatively, the charging position may be provided with an image processing device. The image processing device collects image information of the parking area in real time, and analyzes and processes the image information, to determine the occupancy status information. The occupancy status information of the image processing device is obtained in real time.

In order to further ensure that the quantity of first available parking spaces and the quantity of second available parking spaces are determined simply, efficiently and accurately, in another embodiment of the present disclosure, determining the parking information according to the first information includes: determining available charging position information according to the usage status information and the occupancy status information, where the available charging position information includes the quantity of currently available charging positions and locations of the currently available charging positions, the available charging position is a charging position of which the charging pile is in an unused state and the parking space is in an unoccupied state; determining the quantity of second available parking spaces in the predetermined time period according to the daily usage information and the usage status information; and determining the quantity of first available parking spaces according to the quantity of available charging positions and the quantity of second available parking spaces. In the method, the quantity of currently available charging positions and locations of the currently available charging positions are determined, then the quantity of second available parking spaces in the predetermined time period is determined according to the daily usage information and the usage status information, and finally the quantity of first available parking spaces is determined according to the quantity of available charging positions and the quantity of second available parking spaces. Therefore, the charging of electric vehicles is guaranteed firstly, that is, electric vehicles have sufficient charging positions for use, and some fuel vehicles can also be parked at the charging station, thereby improving the utilization rate of the charging station and reducing idle parking spaces.

In an embodiment of the present disclosure, obtaining the first information in real time includes: obtaining first license plate information of a target vehicle at an entrance of the charging station in real time, where the target vehicle is a vehicle requesting to enter the charging station; obtaining cumulated use time of each of the charging piles. After determining the quantity of first available parking spaces according to the quantity of available charging positions and the quantity of second available parking spaces, the method further includes: determining whether the target vehicle is an electric vehicle according to the first license plate information to obtain a determination result; and determining a target parking area of the target vehicle according to the determination result and the accumulated use time. In the method, the first license plate information of the target vehicle is acquired in real time, and whether the target vehicle is an electric vehicle is determined according to the first license plate information. The accumulated use time of the charging piles is obtained, and the target parking area is determined according to the accumulated use time and the determination result. In this way, the target vehicle is allocated with a parking area with appropriate accumulated use time according to the type of the target vehicle, and the case that charging piles near the exit are overused and charging piles far away from the exit are hardly used is also avoided.

In an embodiment, the accumulated use time of the charging controlling platform is obtained in the method.

In order to further ensure that the target parking area designated for the target vehicle is appropriate, and to avoid the problem that charging piles near the exit are overused and charging piles far away from the exit are hardly used, in an embodiment of the present disclosure, determining the target parking area of the target vehicle according to the determination result and the accumulated use time includes: in a case that the target vehicle is a fuel vehicle, determining the target parking area as a first available charging position, where the first available charging position is an available charging position including the charging pile with the longest accumulated use time; in a case that the target vehicle is an electric vehicle, determining the target parking area as a second available charging position, where the second available charging position is an available charging position including the charging pile with the shortest accumulated use time. Fuel vehicles do not need to be charged, thus when a fuel vehicle requests to enter the charging station, it is assigned with an available charging position including the charging pile with the longest accumulated use time. Electric vehicles generally request to enter the charging station when they need to be charged. Therefore, if the target vehicle is an electric vehicle, it is assigned with an available charging position including the charging pile with the shortest accumulated use time. In this way, the utilization rate of charging piles is averaged, and the problem that some charging piles are overused is avoided, thereby further ensuring reasonable allocation of parking spaces.

In an embodiment, all available charging positions may be ranked according to the accumulated use time from longest to shortest. If the target vehicle is a fuel vehicle, the first available charging position is one of multiple available charging positions ranked top in the accumulated use time. If the target vehicle is an electric vehicle, the second available charging position is one of multiple available charging positions ranked lower in the accumulated use time. Flexible settings may be made by those skilled in the art according to actual conditions.

In an embodiment of the present disclosure, after determining the target parking area of the target vehicle according to the determination result and the accumulated use time, the method further includes: displaying location information of the target parking area on a display device to instruct the target vehicle to park at the target parking area, where the display device is arranged in a predetermined area in the charging station or outside the charging station. Thus the target vehicle can find the target parking area as soon as possible, thereby avoiding the risk of the target vehicle finding wrong parking areas.

Specifically, the display device may be arranged at an entrance gate of the charging station.

In practical applications, the specific location of the target parking area may be displayed on the display device in a form of a map. Alternatively, a parking sequence number corresponding to the target parking area may be displayed on the display device. Of course, other display manners may be used to instruct the target vehicle to find the target parking area.

In an embodiment of the present disclosure, after determining the target parking area of the target vehicle according to the determination result and the accumulated use time, the method further includes: controlling a ground lock corresponding to the target parking area to lower, so that the target vehicle enters the target parking area.

In an embodiment, an instruction to control the ground lock corresponding to the target parking area to lower is sent to the charging controlling platform, so that the charging controlling platform controls the ground lock to lower.

In practical applications, the ground lock has an anti-collision function, which can be quickly and automatically lowered in the event of a collision, and an alarm will be given. The ground lock also has an obstacle detection function. When an obstacle is detected during the ascent of the ground lock, the ground lock stops ascending and descends, and an alarm is given to inform the management personnel of the charging station.

In an embodiment of the present disclosure, after determining the target parking area of the target vehicle according to the determination result and the accumulated use time, the method further includes: in a case that there is a vehicle that has already parked in the target parking area, obtaining second image information of the target parking area; determining second license plate information of the vehicle that has already parked in the target parking area according to the second image information; determining whether the first license plate information and the second license plate information are consistent; determining that the target vehicle is parked incorrectly in a case that the first license plate information and the second license plate information are inconsistent; and generating an error message and sending the error message to a user terminal when the target vehicle is parked incorrectly. The user terminal may be a terminal corresponding to the target vehicle and/or a terminal corresponding to a vehicle in the target parking area. When there is a vehicle that has already parked in the target parking area, the second image information is obtained for image processing to determine the second license plate information of the vehicle in the target parking area. The second license plate information is compared with the first license plate information of the target vehicle, to determine whether the vehicle is parked correctly. And when it is parked incorrectly, an error message is generated and sent to the user terminal to remind the target vehicle of incorrect park.

Specifically, the second image information may be obtained through a charging controlling platform. In a case that the target vehicle is parked incorrectly, an error message is generated and sent to the charging controlling platform, and the charging controlling platform sends the error information to the user terminal.

In practical applications, the error information may also be sent to the management personnel of the charging station so that the management personnel can fully learn the real-time situation of the charging station.

In practical applications, in a case of determining that the target vehicle is parked correctly, the method further includes: determining a first duration, where the first duration is a time period during which the target vehicle stays in the target parking area; obtaining a second duration, where the second duration is a time period during which the target vehicle is charged in the target parking area; determining whether a difference between the first duration and the second duration exceeds a predetermined value; calculating a parking fee corresponding to the difference in a case that the difference between the first duration and the second duration exceeds the predetermined value; and sending the parking fee and the second license plate information to a toll collection device.

In an embodiment, obtaining the second duration includes: obtaining a first time point when the vehicle starts charging, where the first time point is sent by the charging controlling platform; obtaining a second time point when the vehicle ends charging, where the second time point is sent by the charging controlling platform; determining the second duration according to the first time point and the second time point.

In an embodiment, after the target vehicle is parked correctly at the target parking area, the charging pile corresponding to the target parking area is configured to charge the target vehicle.

In an embodiment, in a case that the target vehicle is an electric vehicle, timing is started after verifying that vehicle information is correct and after the electric vehicle enters the target parking area. Parking fee is started to be calculated if charging is not started after a certain period of time from the electric vehicle entering the target parking area. If charging is started after the parking fee is started, charging time is subtracted from total time as actual time for calculating the parking fee, where the total time is a time duration from a time point when the parking fee is started to be calculated to a time point when the target vehicle leaves the charging station. The charging controlling platform sends a notification to inform a user that the charging is completed after the charging of the target vehicle is completed, such as through an app, WeChat, WeChat applet, or SMS, to notify the user that the charging is completed and parking fee will be calculated if not leaving within a certain time period. In the method, the timing starts after receiving the notification that the charging of the electric vehicle is completed from the charging controlling platform, and when the certain time period has passed, the parking fee is calculated, and the parking fee will be settled when the electric vehicle leaves the charging station. Thus a higher utilization rate of charging piles is guaranteed.

In an embodiment, when the target vehicle leaves the target parking area, an instruction to control the raising of the ground lock corresponding to the target parking area is sent to the charging controlling platform, so that the charging controlling platform controls the corresponding ground lock to rise.

In practical applications, a toll collection device is arranged at an exit gate of the charging station, and the parking fee is settled when the target vehicle leaves the charging station through the exit gate.

In practical applications, after determining the quantity of first available parking spaces according to the quantity of available charging positions and the quantity of second available parking spaces, the method further includes at least one of: displaying the quantity of first available parking spaces and/or the quantity of second available parking spaces on a display device, where the display device is arranged in a predetermined area in the charging station or outside the charging station; and sending the quantity of first available parking spaces and/or the quantity of second available parking spaces to a user terminal.

In practical applications, the display device may be arranged at an entrance gate of the charging station.

It should be noted that steps shown in the flowchart of the accompanying drawings may be executed in a computer system such as a set of computer-executable instructions, and although a logical sequence is shown in the flowchart, the steps shown or described may be performed in other order in some cases.

A device for controlling a charging station is provided according to an embodiment of the present disclosure. It should be noted that the device according to the embodiment of the present disclosure may be used to execute the method for controlling the charging station provided in the embodiments of the present disclosure. The device provided in the embodiment of the present disclosure is described hereinafter.

Figure 2 is a schematic diagram of a device for controlling a charging station according to an embodiment of the present disclosure. The charging station includes a plurality of charging positions, and each of the plurality of charging positions includes a charging pile and a parking space corresponding to the charging pile. As shown in Figure 2, the device includes a first acquisition unit 10 and a first determination unit 20. The first acquisition unit 10 is configured to: obtain first information in real time, where the first information includes usage status information of the charging piles, daily usage information of the charging piles, and occupancy status information of the parking spaces, the usage status information is information about whether the charging piles being currently in use, and the daily usage information is information about a quantity of charging piles used in a predetermined time period of each day obtained according to historical data. The first determination unit 20 is configured to: determine parking information according to the first information, where the parking information includes a quantity of first available parking spaces and a quantity of second available parking spaces, the first available parking spaces are used for fuel vehicles, and the second available parking spaces are used for electric vehicles.

According to the device, first information is obtained by the first acquisition unit in real time, where the first information includes information about whether the charging piles being currently in use, information about the quantity of charging piles used in a predetermined time period of each day obtained according to historical data, and occupancy status information of the parking spaces. Then the quantity of first available parking spaces for fuel vehicles and the quantity of second available parking spaces for electric vehicles are determined by the first determination unit according to the first information. Compared with the conventional technology, in the device according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

In practical applications, the daily usage information may be obtained by: dividing 24 hours of a day into multiple predetermined time periods, counting the quantity of charging piles used in each of the multiple predetermined time periods based on historical data, and analyzing the quantity of charging piles used in the multiple predetermined time periods by utilizing a prediction model. The daily use information includes information about the quantity of charging piles used in each predetermined time period of each day.

In an embodiment, the first acquisition unit includes: a first acquisition module, a second acquisition module, and a first determination module. The first acquisition module is configured to obtain the usage status information and the daily usage information in real time; the second acquisition module is configured to obtain first image information of a parking area in real time, where the parking area is an area corresponding to the parking space; and the first determination module is configured to determine the occupancy status information according to the first image information. With the device, it can further ensure to obtain the occupancy status information simply and quickly by obtaining the first image information of the parking area and determining whether the parking space is occupied according to the first image information.

In an embodiment, the device is configured to obtain usage status information, daily usage information, and first image information of a charging pile controlling platform in real time. The first image information is a photo or video of a parking area. A charging pile is installed with one or more image collection devices, such as a camera, that can periodically take photos and/or videos of a parking area and then upload collected photos and/or videos of the parking area to the charging pile controlling platform. By acquiring the photos and/or videos sent by the charging pile controlling platform, and performing image processing on the photos and/or videos, it is determined that whether there is a vehicle in the parking area, so as to determine the occupancy status information. Alternatively, it is also possible to directly obtain the usage status information, the daily usage information, and the first image information. Alternatively, the charging position may be provided with an image processing device. The image processing device collects image information of the parking area in real time, and analyzes and processes the image information, to determine the occupancy status information. The occupancy status information of the image processing device is obtained by the device in real time.

In order to further ensure that the quantity of first available parking spaces and the quantity of second available parking spaces are determined simply, efficiently and accurately, in another embodiment of the present disclosure, the first determination unit includes: a second determination module, a third determination module, and a fourth determination module. The second determination module is configured to determine available charging position information according to the usage status information and the occupancy status information, where the available charging position information includes the quantity of currently available charging positions and locations of the currently available charging positions, an available charging position is a charging position of which the charging pile is in an unused state and the parking space is in an unoccupied state. The third determination module is configured to determine the quantity of second available parking spaces in the predetermined time period according to the daily usage information and the usage status information. The fourth determination module is configured to determine the quantity of first available parking spaces according to the quantity of available charging positions and the quantity of second available parking spaces. According to the device, the quantity of currently available charging positions and locations of the currently available charging positions are determined, then the quantity of second available parking spaces in the predetermined time period is determined according to the daily usage information and the usage status information, and finally the quantity of first available parking spaces is determined according to the quantity of available charging positions and the quantity of second available parking spaces. Therefore, the charging of electric vehicles is guaranteed firstly, that is, electric vehicles have sufficient charging positions for use, and some fuel vehicles can also be parked at the charging station, thereby improving the utilization rate of the charging station and reducing idle parking spaces.

In an embodiment of the present disclosure, the first acquisition unit includes a third acquisition module and a fourth acquisition module. The third acquisition module is configured to obtain first license plate information of a target vehicle at an entrance of the charging station in real time, where the target vehicle is a vehicle requesting to enter the charging station; and the fourth acquisition module is configured to obtain a cumulated use time of each of the charging piles. The device further includes a second determination unit and a third determination unit, where the second determination unit is configured to determine whether the target vehicle is an electric vehicle according to the first license plate information to obtain a determination result, after determining the quantity of first available parking spaces according to the quantity of available charging positions and the quantity of second available parking spaces; and the third determination unit is configured to determine a target parking area of the target vehicle according to the determination result and the accumulated use time. According to the device, the first license plate information of the target vehicle is acquired in real time, and whether the target vehicle is an electric vehicle is determined according to the first license plate information. The accumulated use time of the charging piles is obtained, and the target parking area is determined according to the accumulated use time and the determination result. In this way, the target vehicle is allocated with a parking area with appropriate accumulated use time according to the type of the target vehicle, and the case that charging piles near the exit are overused and charging piles far away from the exit are hardly used is also avoided.

In an embodiment, the device obtains the accumulated use time of the charging controlling platform.

In order to further ensure that the target parking area designated for the target vehicle is appropriate, and to avoid the problem that charging piles near the exit are overused and charging piles far away from the exit are hardly used, in an embodiment of the present disclosure, the third determination unit includes a fifth determination module and a sixth determination module. The fifth determination module is configured to determine the target parking area as a first available charging position in a case that the target vehicle is a fuel vehicle, where the first available charging position is an available charging position including the charging pile with the longest accumulated use time; and the sixth determination module is configured to determine the target parking area as a second available charging position in a case that the target vehicle is an electric vehicle, where the second available charging position is an available charging position including the charging pile with the shortest accumulated use time. Fuel vehicles do not need to be charged, thus when a fuel vehicle requests to enter the charging station, it is assigned with an available charging position including the charging pile with the longest accumulated use time. Electric vehicles generally request to enter the charging station when they need to be charged. Therefore, if the target vehicle is an electric vehicle, it is assigned with an available charging position including the charging pile with the shortest accumulated use time. In this way, the utilization rate of charging piles is averaged, and the problem that some charging piles are overused is avoided, thereby further ensuring reasonable allocation of parking spaces.

In an embodiment, all available charging positions may be ranked according to the accumulated use time from longest to shortest. If the target vehicle is a fuel vehicle, the first available charging position is one of multiple available charging positions ranked top in the accumulated use time. If the target vehicle is an electric vehicle, the second available charging position is one of multiple available charging positions ranked lower in the accumulated use time. Flexible settings may be made by those skilled in the art according to actual conditions.

In an embodiment of the present disclosure, the device further includes a display device, and the display device is configured to display location information of the target parking area to instruct the target vehicle to park at the target parking area, after the target parking area of the target vehicle is determined according to the determination result and the accumulated use time. The display device is arranged in a predetermined area in the charging station or outside the charging station. Thus the target vehicle can find the target parking area as soon as possible, thereby avoiding the risk of the target vehicle finding wrong parking areas.

Specifically, the display device may be arranged at an entrance gate of the charging station.

In practical applications, the specific location of the target parking area may be displayed on the display device in a form of a map; alternatively, a parking sequence number corresponding to the target parking area may be displayed on the display device. Of course, other display manners may be used to instruct the target vehicle to find the target parking area.

In an embodiment of the present disclosure, the device further includes a control unit, and the control unit is configured to control a ground lock corresponding to the target parking area to lower, so that the target vehicle enters the target parking area, after the target parking area of the target vehicle is determined according to the determination result and the accumulated use time.

In an embodiment, the device is configured to send an instruction to control the ground lock corresponding to the target parking area to lower to a charging controlling platform, so that the charging controlling platform controls the ground lock to lower.

In practical applications, the ground lock has an anti-collision function, which can be quickly and automatically lowered in the event of a collision, and an alarm will be given. The ground lock also has an obstacle detection function. When an obstacle is detected during the ascent of the ground lock, the ground lock stops ascending and descends, and an alarm is given to inform the controlling personnel of the charging station.

In an embodiment of the present disclosure, the device further includes: a second acquisition unit, a fourth determination unit, a fifth determination unit, and a generating unit. The second acquisition unit is configured to obtain second image information of the target parking area in a case that a vehicle has parked in the target parking area after determining the target parking area of the target vehicle according to the determination result and the accumulated use time; the fourth determination unit is configured to determine second license plate information of the vehicle parked in the target parking area according to the second image information; the fifth determination unit is configured to: determine whether the first license plate information and the second license plate information are consistent, determine that the target vehicle is parked incorrectly if the first license plate information and the second license plate information are inconsistent; and the generating unit is configured to generate an error message and send the error message to a user terminal when the target vehicle is parked incorrectly. The user terminal may be a terminal corresponding to the target vehicle and/or a terminal corresponding to a vehicle in the target parking area. When there is a vehicle that has already parked in the target parking area, the second image information is obtained for image processing to determine the second license plate information of the vehicle in the target parking area. The second license plate information is compared with the first license plate information of the target vehicle, to determine whether the vehicle is parked correctly. And when it is parked incorrectly, an error message is generated and sent to the user terminal to remind the target vehicle of incorrect park.

Specifically, the device may obtain the second image information through a charging controlling platform. In a case that the target vehicle is parked incorrectly, an error message is generated and sent to the charging controlling platform, and the charging controlling platform sends the error information to the user terminal.

In practical applications, the error information may also be sent to the controlling personnel of the charging station so that the controlling personnel can fully learn the real-time situation of the charging station.

In practical applications, the device further includes: a sixth determination unit, a third acquisition unit, a seventh determination unit, and a sending unit. The sixth determination unit is configured to determine a first duration in a case of determining that the target vehicle is parked correctly, where the first duration is a time period during which the target vehicle stays in the target parking area; the third acquisition unit is configured to obtain a second duration, where the second duration is a time period during which the target vehicle is charged in the target parking area; the seventh determination unit is configured to: determine whether a difference between the first duration and the second duration exceeds a predetermined value, and calculate a parking fee corresponding to the difference in a case that the difference between the first duration and the second duration exceeds the predetermined value; and the sending unit is configured to send the parking fee and the second license plate information to a toll collection device.

In an embodiment, the third acquisition unit includes: a fifth acquisition module, a sixth acquisition module, and a seventh determination module. The fifth acquisition module is configured to obtain a first time point when the vehicle starts charging, where the first time point is sent by the charging controlling platform; the sixth acquisition module is configured to obtain a second time point when the vehicle ends charging, where the second time point is sent by the charging controlling platform; and the seventh determination module is configured to determine the second duration according to the first time point and the second time point.

In an embodiment, in a case that the target vehicle is an electric vehicle, timing is started after verifying that vehicle information is correct and after the electric vehicle enters the target parking area. Parking fee is started to be calculated if charging is not started after a certain period of time from the electric vehicle entering the target parking area. If charging is started after the parking fee is started, charging time is subtracted from total time as actual time for calculating the parking fee, where the total time is a time duration from a time point when the parking fee is started to be calculated to a time point when the target vehicle leaves the charging station. The charging controlling platform sends a notification to inform a user that the charging is completed after the charging of the target vehicle is completed, such as through an app, WeChat, WeChat applet, or SMS, to notify the user that the charging is completed and parking fee will be calculated if not leaving within a certain time period. In the method, the timing starts after receiving the notification that the charging of the electric vehicle is completed from the charging controlling platform, and when the certain time period has passed, the parking fee is calculated, and the parking fee will be settled when the electric vehicle leaves the charging station. Thus a higher utilization rate of charging piles is guaranteed.

In an embodiment, when the target vehicle leaves the target parking area, an instruction to control the raising of the ground lock corresponding to the target parking area is sent to the charging controlling platform, so that the charging controlling platform controls the corresponding ground lock to rise.

In practical applications, a toll collection device is set at an exit gate of the charging station, and the parking fee is settled when the target vehicle leaves the charging station through the exit gate.

In practical applications, a display device is arranged in a predetermined area in the charging station or outside the charging station, and the device further includes the display unit. The display unit is configured to, after determining the quantity of first available parking spaces according to the quantity of available charging positions and the quantity of second available parking spaces, display the quantity of first available parking spaces and/or the quantity of second available parking spaces. Or the quantity of first available parking spaces and/or the quantity of second available parking spaces is sent to a user terminal.

In practical applications, the display device may be arranged at an entrance gate of the charging station.

The charging station controlling device includes a processor and a memory. The first acquisition unit and the first determination unit are all stored as program units in the memory, and the program units stored in the memory are executed by the processor to realize corresponding functions.

The processor includes one or more kernels, which are used to invoke a corresponding program unit from the memory. By adjusting a parameter of the kernel, the problem that the idle parking spaces do not correspond to the idle charging piles in the conventional charging station is solved.

The memory includes a non-permanent memory in a computer-readable medium, a random access memory (RAM), and/or a non-volatile memory such as a read only memory (ROM) or a flash memory (flash RAM), and the memory includes at least one memory chip.

According to an embodiment of the present disclosure there is provided a computer-readable storage medium, the computer-readable storage medium includes a program stored thereon, where the program, when being executed, implements any one of the aforementioned methods.

According to an embodiment of the present disclosure there is provided a processor, the processor is configured to run a program, where the program, when being executed, implements any one of the aforementioned methods.

According to an embodiment of the present disclosure there is provided a device including a processor, a memory, and a program stored on the memory and capable of running by the processor, where the program, when being executed by the processor, implements:
a step S101 of obtaining first information in real time, where the first information comprises usage status information of the charging piles, daily usage information of the charging piles, and occupancy status information of the parking spaces, the usage status information is information about whether the charging piles being currently in use, and the daily usage information is information about a quantity of charging piles used in a predetermined time period of each day obtained according to historical data; and
a step S 102 of determining parking information according to the first information, where the parking information comprises a quantity of first available parking spaces and a quantity of second available parking spaces, the first available parking spaces are used for fuel vehicles, and the second available parking spaces are used for electric vehicles.

The device may be a server, a PC, a PAD, a mobile phone, etc.

According to an embodiment of the present disclosure there is provided a computer program product, which when being executed on a data processing device, is configured to perform:
a step S101 of obtaining first information in real time, where the first information comprises usage status information of the charging piles, daily usage information of the charging piles, and occupancy status information of the parking spaces, the usage status information is information about whether the charging piles being currently in use, and the daily usage information is information about a quantity of charging piles used in a predetermined time period of each day obtained according to historical data; and
a step S102 of determining parking information according to the first information, where the parking information comprises a quantity of first available parking spaces and a quantity of second available parking spaces, the first available parking spaces are used for fuel vehicles, and the second available parking spaces are used for electric vehicles.

According to an embodiment of the present disclosure there is provided a system for controlling a charging station, including a parking controlling platform and a charging controlling platform. The parking controlling platform includes a control device, and the control device, when being executed, implements any one of the aforementioned methods; the charging controlling platform is in communication connection with the parking controlling platform, and the charging controlling platform is configured to: obtain usage status information of the charging piles, daily usage information of the charging piles and first image information of the parking area, and send the usage status information, the daily usage information and the first image information to the parking controlling platform.

The system includes the parking controlling platform and the charging controlling platform, and the charging controlling platform is in communication connection with the parking controlling platform. The parking controlling platform includes the control device, and the control device, when being executed, implements any one of the aforementioned methods. The charging controlling platform is configured to: obtain usage status information of the charging piles, daily usage information of the charging piles and first image information of the parking area, and send the usage status information, the daily usage information and the first image information to the parking controlling platform. Compared with the conventional technology, in the system according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

In practical applications, the parking controlling platform may obtain information such as the fault status, operating status, remaining charging time, and total accumulated charging time of each charging pile in the charging station through the charging controlling platform. In addition, the parking controlling platform may send the occupancy status information of parking spaces corresponding to each charging pile to the charging controlling platform, for displaying the available parking spaces on a map in an application.

In the system, the charging controlling platform and the parking controlling platform are interconnected. According to big data statistics, the parking controlling platform can allow fuel vehicles to park for a short time when the parking spaces are free, which maximizes the utilization of parking spaces. The charging pile is allocated according to accumulated use time of each charging pile, which can prevent the case that charging piles close to the exit are overused and charging piles far away from the exit are hardly used. After the charging is completed, the user will be notified of the completion of the charging through an application, WeChat, SMS, etc., and the parking fee will be calculated after the free parking time has expired, thereby increasing the utilization rate of charging piles.

According to an embodiment of the present disclosure there is provided a charging station system, including a charging station and a system for controlling the charging station, and the system is the aforementioned system for controlling the charging station.

The charging station system includes a charging station and the above-mentioned system for controlling the charging station. Compared with the conventional technology, in the system according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

In the above-mentioned embodiments of the present disclosure, each embodiment lays emphasis on differences from other embodiments. For related parts that are not described in detail in an embodiment, reference may be made to description in other embodiments.

It should be understood that technical solutions in embodiments of the present disclosure may be implemented in other ways. The device embodiments described above are merely illustrative. For example, the above-mentioned units may be divided according to logical functions, or may be divided in other ways in actual implementation. For example, multiple units or components may be combined or integrated into another system, or some features thereof may be ignored or not implemented. In addition, mutual coupling, direct coupling, or communication connection between the units or components described in the embodiments may refer to indirect coupling or communication connection through some interfaces, units or modules, and may also refer to electrical connection or other connection forms.

Units described as separate components may or may not be physically separated. The components shown as units may be or not be physical units, i.e., the units may be located at the same place or may be distributed onto multiple network units. All or a part of the modules may be selected based on actual needs to realize the objective of the solutions according to the embodiments.

The functional units in embodiments of the present disclosure may be integrated into one processing unit, or each unit may exist alone physically, or two or more units may be integrated into one unit. The integrated unit may be implemented in the form of hardware or a software functional unit.

If the integrated unit is implemented in the form of a software functional unit and sold or used as an independent product, it may be stored in a computer-readable storage medium. Based on this understanding, the technical solutions of the present disclosure, or a part that contributes to the existing technology, or all or part of the technical solutions may be embodied in the form of a software product in essence. The computer software product is stored in a storage medium and includes instructions to enable a computer device (which may be a personal computer, a server, or a network device, etc.) to perform all or part of the steps of the foregoing methods of the embodiments of the present disclosure. The storage medium includes: U disk, read-only memory (ROM), random access memory (RAM), mobile hard disk, magnetic disk or optical disk and other media that can store program codes.

From the above description, it can be seen that following technical effects may be achieved according to the embodiments of the present disclosure.

In the method for controlling the charging station, first information is obtained in real time, where the first information includes information about whether the charging piles being currently in use, information about the quantity of charging piles used in a predetermined time period of each day obtained according to historical data, and occupancy status information of the parking spaces. Then the quantity of first available parking spaces for fuel vehicles and the quantity of second available parking spaces for electric vehicles are determined according to the first information. Compared with the conventional technology, in the method according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

According to the device for controlling the charging station, first information is obtained by the first acquisition unit in real time, where the first information includes information about whether the charging piles being currently in use, information about the quantity of charging piles used in a predetermined time period of each day obtained according to historical data, and occupancy status information of the parking spaces. Then the quantity of first available parking spaces for fuel vehicles and the quantity of second available parking spaces for electric vehicles are determined according to the first information. Compared with the conventional technology, in the device according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

The system for controlling the charging station includes the parking controlling platform and the charging controlling platform, and the charging controlling platform is in communication connection with the parking controlling platform. The parking controlling platform includes a control device, and the control device implements any one of the aforementioned methods. The charging controlling platform is configured to: obtain usage status information and daily usage information of the charging piles and first image information of the parking area, and send the usage status information, the daily usage information and the first image information to the parking controlling platform. Compared with the conventional technology, in the system according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

The charging station system includes a charging station and the above-mentioned system for controlling the charging station. Compared with the conventional technology, in the system according to embodiments of the present disclosure the quantity of available charging positions is determined according to both whether the charging piles being currently in use and whether the parking spaces being currently occupied, to ensure that charging piles and parking spaces of the available charging positions are both in an available state. Thus the one-to-one correspondence between the idle charging piles and the idle parking spaces is ensured, to solve the problem that the idle parking spaces and the idle charging piles in the conventional charging station do not correspond to each other due to for example the vehicle does not leave and still occupies the park space after it is charged, and thus a better user experience is ensured. Furthermore, the quantity of available parking spaces for electric vehicles and the quantity of available parking spaces for fuel vehicles are determined by combining the daily usage information of the charging piles, the usage status information of the charging piles, and the occupancy status information of the parking spaces. In this way, it is ensured that electric vehicles have sufficient charging positions for use and some fuel vehicles can also be parked at the charging station, thereby ensuring a higher utilization rate of the charging station.

The foregoing descriptions are only preferred embodiments of the present disclosure, and are not intended to limit the present disclosure. For those skilled in the art, various modifications and changes may be made to the present disclosure.

## Claims

1. A method for controlling a charging station, wherein the charging station comprises a plurality of charging positions, each of the plurality of charging positions comprises a charging pile and a parking space corresponding to the charging pile, and the method comprises:
obtaining first information in real time, wherein the first information comprises usage status information of the charging piles, daily usage information of the charging piles, and occupancy status information of the parking spaces, the usage status information is information about whether the charging piles being currently in use, and the daily usage information is information about a quantity of charging piles used in a predetermined time period of each day obtained according to historical data; and
determining parking information according to the first information, wherein the parking information comprises a quantity of first available parking spaces and a quantity of second available parking spaces, the first available parking spaces are used for fuel vehicles, and the second available parking spaces are used for electric vehicles.

2. The method according to claim 1, wherein obtaining the first information in real time comprises:
obtaining the usage status information and the daily usage information in real time;
obtaining first image information of a parking area in real time, wherein the parking area is an area corresponding to the parking space; and
determining the occupancy status information according to the first image information.

3. The method according to claim 1, wherein determining the parking information according to the first information comprises:
determining information about available charging positions according to the usage status information and the occupancy status information, wherein the information about available charging positions comprises a quantity of currently available charging positions and locations of the currently available charging positions, the available charging position is a charging position of which the charging pile is in an unused state and the parking space is in an unoccupied state;
determining a quantity of second available parking spaces in the predetermined time period according to the daily usage information and the usage status information; and
determining a quantity of first available parking spaces according to the quantity of the available charging positions and the quantity of second available parking spaces.

4. The method according to claim 3, wherein
obtaining the first information in real time comprises:
obtaining first license plate information of a target vehicle at an entrance of the charging station in real time, wherein the target vehicle is a vehicle requesting to enter the charging station; and
obtaining cumulated use time of each of the charging piles; and
after determining the quantity of first available parking spaces according to the quantity of available charging positions and the quantity of second available parking spaces, the method further comprises:
determining whether the target vehicle is an electric vehicle according to the first license plate information, to obtain a determination result; and
determining a target parking area of the target vehicle according to the determination result and the accumulated use time.

5. The method according to claim 4, wherein determining the target parking area of the target vehicle according to the determination result and the accumulated use time comprises:
in a case that the target vehicle is a fuel vehicle, determining the target parking area as a first available charging position, wherein the first available charging position is an available charging position comprising the charging pile with longest accumulated use time; and
in a case that the target vehicle is an electric vehicle, determining the target parking area as a second available charging position, wherein the second available charging position is an available charging position comprising the charging pile with shortest accumulated use time.

6. The method according to claim 4, wherein after determining the target parking area of the target vehicle according to the determination result and the accumulated use time, the method further comprises:
displaying location information of the target parking area on a display device to instruct the target vehicle to park at the target parking area, wherein the display device is arranged in a predetermined area in the charging station or outside the charging station.

7. The method according to claim 4, wherein after determining the target parking area of the target vehicle according to the determination result and the accumulated use time, the method further comprises:
controlling a ground lock corresponding to the target parking area to lower, to cause the target vehicle to enter the target parking area.

8. The method according to claim 4, wherein after determining the target parking area of the target vehicle according to the determination result and the accumulated use time, the method further comprises:
in a case that there is a vehicle that has already parked in the target parking area, obtaining second image information of the target parking area;
determining second license plate information of the vehicle that has already parked in the target parking area according to the second image information;
determining whether the first license plate information and the second license plate information are consistent;
determining that the target vehicle is parked incorrectly in a case that the first license plate information and the second license plate information are inconsistent; and
generating an error message and sending the error message to a user terminal when the target vehicle is parked incorrectly.

9. The method according to claim 8, wherein in a case of determining that the target vehicle is parked correctly, the method further comprises:
determining a first duration, wherein the first duration is a time period during which the target vehicle stays in the target parking area;
obtaining a second duration, wherein the second duration is a time period during which the target vehicle is charged in the target parking area;
determining whether a difference between the first duration and the second duration exceeds a predetermined value;
calculating a parking fee corresponding to the difference in a case that the difference between the first duration and the second duration exceeds the predetermined value; and
sending the parking fee and the second license plate information to a toll collection device.

10. The method according to claim 3, wherein after determining the quantity of first available parking spaces according to the quantity of available charging positions and the quantity of second available parking spaces, the method further comprises at least one step of:
displaying the quantity of first available parking spaces and/or the quantity of second available parking spaces on a display device, wherein the display device is arranged in a predetermined area in the charging station or outside the charging station; and
sending the quantity of first available parking spaces and/or the quantity of second available parking spaces to a user terminal.

11. A device for controlling a charging station, wherein the charging station comprises a plurality of charging positions, each of the plurality of charging positions comprises a charging pile and a parking space corresponding to the charging pile, and the device comprises:
a first acquisition unit, configured to: obtain first information in real time, wherein the first information comprises usage status information of the charging piles, daily usage information of the charging piles, and occupancy status information of the parking spaces, the usage status information is information about whether the charging piles being currently in use, and the daily usage information is information about a quantity of charging piles used in a predetermined time period of each day obtained according to historical data; and
a first determination unit, configured to: determine parking information according to the first information, wherein the parking information comprises a quantity of first available parking spaces and a quantity of second available parking spaces, the first available parking spaces are used for fuel vehicles, and the second available parking spaces are used for electric vehicles.

12. A computer-readable storage medium, wherein the computer-readable storage medium comprises a program stored thereon, and the program, when being executed, implements the method according to any one of claims 1 to 10.

13. An apparatus for controlling a charging station, comprising a processor and a computer-readable storage medium that stored a program thereon, the program, when being executed by the processor, implements the method according to any one of claims 1 to 10.

14. A system for controlling a charging station, comprising:
a parking controlling platform comprising a control device, wherein the control device is configured to implement the method according to any one of claims 1 to 10; and
a charging controlling platform, being in communication connection with the parking controlling platform, wherein the charging controlling platform is configured to: obtain usage status information of the charging piles, daily usage information of the charging piles and first image information of the parking area, and send the usage status information, the daily usage information and the first image information to the parking controlling platform.

15. A charging station system, comprising:
a charging station; and
a controlling system for the charging station, wherein the controlling system is the system for controlling the charging station according to claim 14.
